# EUROPEAN PATENT SPECIFICATION

(11) **EP 2 226 148 B1**
(45) Date of publication and mention of the grant of the patent: **26.02.2014**
(21) Application number: 09154492.4
(22) Date of filing: 06.03.2009
(51) Int. Cl.: B23K 9/18, B23K 35/36, B65D 65/40, B23K 35/362, B23K 35/368

(54) **Process of submerged arc welding in vertical and overhead position with flux retaining packing having a polyethylene foil**
Verfahren zum Pulverschweissen in Senkrecht- und Überkopforientierung mit einer eine Polyäthylen-Folie aufweisenden Flussmittelverpackung
Procédé de soudage à l'arc submergé en position verticale et renversée avec un paquet comprenant une feuille de polyéthylène et contenant du flux

(43) Date of publication of application: 08.09.2010
(73) Proprietor: Oerlikon Schweisstechnik GmbH, 67304 Eisenberg/Pfalz (DE)
(72) Inventor: Niemayer, Reinhard, 67304 Eisenberg / Pfalz (DE); Bleckmann, Lars, 67304 Eisenberg / Pfalz (DE); Gernat, Frank, 67304 Eisenberg / Pfalz (DE); Prey, Stefan, 67304 Eisenberg / Pfalz (DE); Schulz, Steffen, 67304 Eisenberg / Pfalz (DE)
(74) Representative: Pittis, Olivier

(56) References cited:
- EP-A- 1 712 321
- DD-A5- 295 111
- FR-A- 2 042 909
- GB-A- 1 222 237
- JP-A- 55 114 472
- JP-A- 2000 289 144
- JP-A- 2007 307 570
- US-A- 3 223 818
- DATABASE WPI Week 199021 Thomson Scientific, London, GB; AN 1990-162841 XP002538473 -& SU 1 502 239 A (AZOV MARINE STEAMER) 23 August 1989 (1989-08-23)
- DATABASE WPI Week 198631 Thomson Scientific, London, GB; AN 1986-203492 XP002538474 -& SU 1 201 085 A (PROMSTALKONSTRUKTSI) 30 December 1985 (1985-12-30)

## Description

The invention concerns a submerged arc welding process for vertical and overhead position welding using a packed welding flux, see claim 1.

Submerged arc welding (hereafter SAW) is a well-know welding process for welding steels, which is commonly used for welding thick steel plates, for example with a thickness of at least about 8 mm. SAW is commonly used for manufacturing heavy mechanical equipments, such as presses, boilers and chemical reactors; pipes, including pipelines and tubular elements used in the construction field ; wind mill towers; and many other types of heavy equipments.

Indeed, in contrast to a MAG (Metal Active Gas) welding process with solid wire electrodes, welding with stick electrodes or with flux-cored wires that require a multilayer weld to be done in several successive welding passes when the thickness of the material to be welded is more than 8 mm. The SAW process requires only one pass, i.e., a monolayer weld can be done.

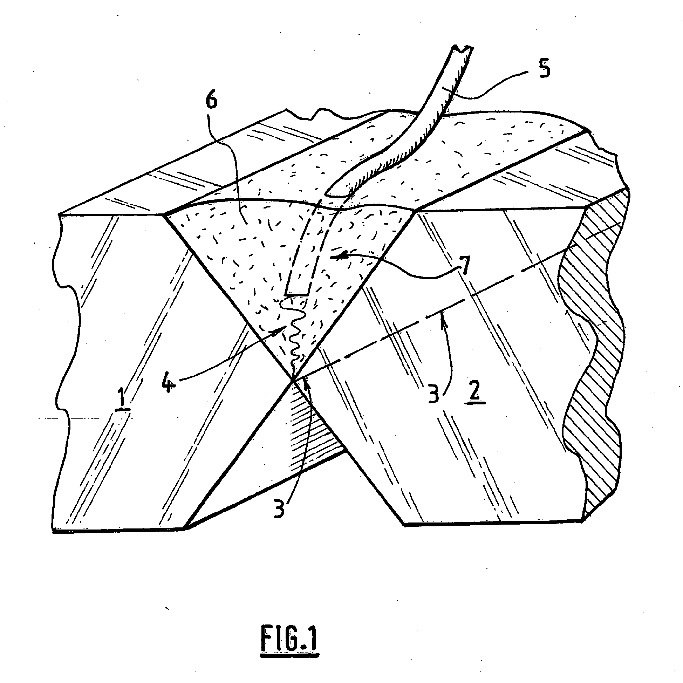

Actually, in SAW, as illustrated on Figure 1, the electric arc 4 is submerged under a thick layer of mineral flux 6 loosely deployed in the prepared welding joint 1, 2 to be joined together, over the weld region, i.e., the plan of joint 7.

The advantage of using such a flux 6 is that a high power electric arc 4 can be used for melting one or several thicker welding wires 5, i.e., with a diameter up to 5 mm, thereby obtaining a high deposit of material, which allows the realization a one-path weld.

During welding, a part of the flux is melted and transformed into a crust of slag, that is formed on the surface of the weld and which can be removed after the weld has cooled down. Excessive flux can be recovered and reused in a further SAW operation.

In addition, different shape-of-joint configurations can be welded in SAW, such as X, Y or V profiles, which are the cross section profiles of the edges of the piece or pieces 1, 2 that are put into contact 3 in order to be welded together along the plan of joint 7.

For instance, a typical configuration is the X-profile (ref 3) as shown in Figure 1. For welding such an X-profile, a first fixation or root pass is typically done by MAG welding thereby making the two edges integral one to the other, and then at least one SAW weld pass can be operated on each side of the root-welded plates, thereby filling by SAW the plan of joint with melted metal on each side of the plate or plates 1, 2 to be welded, preferably with only one pass as noted above.

A SAW process is normally automated. This can be accomplished using :
- either a mobile tractor comprising an electric power head, a wire feeder, a flux delivering-device and a flux exhaustion, the tractor being arranged on the plate(s) to be welded together so as to be able to run over the plate(s) along a guide and to realize the SAW welding of the welding joint. Such a device is manufactured by Air Liquide Welding under the reference Megatrac 6 / Subarc 3C.
- or a welding head containing these elements as part of a column and boom equipment. Such a device is manufactured by Air Liquide Welding under the reference MECASAF.

SAW is a very powerful welding process leading to high productivity. However, SAW is currently limited to the horizontal welding, i.e., to welding operations to be done on plate(s) arranged in horizontal position or with very low angles with respect to horizontal, typically less than 20°, due to the presence of the powder flux that recovers the plan of joint that has to be welded.

This is the reason why, SAW installation of large size, for instance installations used for welding vessels of several meters of diameters, always include heavy turning and tilting equipment that is able to always way the weld to be done in horizontal way so as to keep the flux in place.

However, in some circumstances, using such heavy turning equipments is not possible due to other constraints, e.g., in shipbuilding, in orbital welding of pipes during the time when pipeline is being laid. In these circumstances, alternative welding processes have to be carried out, even if these alternative processes are often less efficient than SAW.

There is an additional factor that limits the welding of steeper angles up to vertical and over head positions. Actually, the electrical arc melts the base metal, i.e., the edges to be welded together, as well as the welding wire thereby resulting in a liquid metal bath that can drip away to gravity, if the weld cooling and solidification is not fast enough.

This problem can be overcome with difficulties in MAG welding and in stick electrode or in flux-cored wire welding, but not in SAW welding.

Indeed, in MAG welding, only a very experience welder would be able optimise the energy provided to the weld, on the one hand, and the welding speed, on the other hand, in a way that the liquid bath of the weld solidifies quickly without dripping away.

Furthermore, in welding with stick electrodes or with flux-cored wire, the slag provided by the coating of the stick electrode or the mineral filling core of the flux-cored wire provides a quicker solidified crust that backs the molten weld bath and avoids or limits that liquid metal from dripping away.

However, the solidifying speed and the crust strength are related to the mineral composition of the consumable, i.e. electrode or wire, such in turn depends on the material to be weld. As a consequence, there exists some limitations in the use of such welding processes for overhead and vertical welding operations as the consumable that will be used in conjunction with some particular base metals will not provide sufficient solidifying speed and/or crust strength for sustaining the metal bath.

Document JP-A-2007307570, on which is based the preamble of claim 1, disclosed a SAW device for vertical welding comprising a mechanical device for holding the flux in position in the plan of joint to be welded as well as flux supplying means for feeding the flux to the mechanical device.

Further, document EP-A- 1712321 teaches a bag for storing flux material so as to protect it from humidity over the time. The bag has a sandwich structure made of several foils of polymer and aluminium.

Furthermore, document GB-A-1222237 describes a soldering flux for resistance welding of copper parts mixed with an adhesive material so as to form a paste having adhesive properties.

In view of this, the main problem to be solved is how to be able to use a submerged arc welding (SAW) process for vertical welding or for welding in overhead positions.

In other words, a main goal of the present invention is to propose a SAW process adapted for vertical and overhead position welding which limits or eliminates the risk of the dropping of the liquid metal bath created by the fusion of the base metal and the consumable(s), i.e. the one or several wires, by the fusion energy provided by an electric current.

Another goal of the present invention is to propose a SAW process that can be used to weld any type of structures, including three-dimensional structures of huge dimensions, such as storage or reactor vessels, pipes, pipelines, wind mill supports, or similar.

The solution according to the present invention is a submerged arc welding (SAW) process as defined in claim 1.

Depending upon the embodiment, the process of the present invention can comprise one or several of the following additional features :
- the welding consumable is a (or several) meltable welding wire(s).
- the plan of joint to be welded forms an angle (α) of at least 40° with the horizontal, preferably of at least 50° with the horizontal.
- the plan of joint to be welded forms an angle (α) of at least 70° with the horizontal, preferably of at least 80° with the horizontal.
- the plan of joint to be welded forms an angle (α) from about 80° to about 100° with the horizontal, preferably of about 90° with the horizontal.
- the flux maintaining means comprise a flux-containing packing that contains the welding flux.

The polyethylene foil has an elongated tubular shape and contains the welding flux.

According to the present invention, the plan of joint to be welded forms an angle (α) of at least 30° with the horizontal, such as in the case of a vertical welding or overhead welding operation.

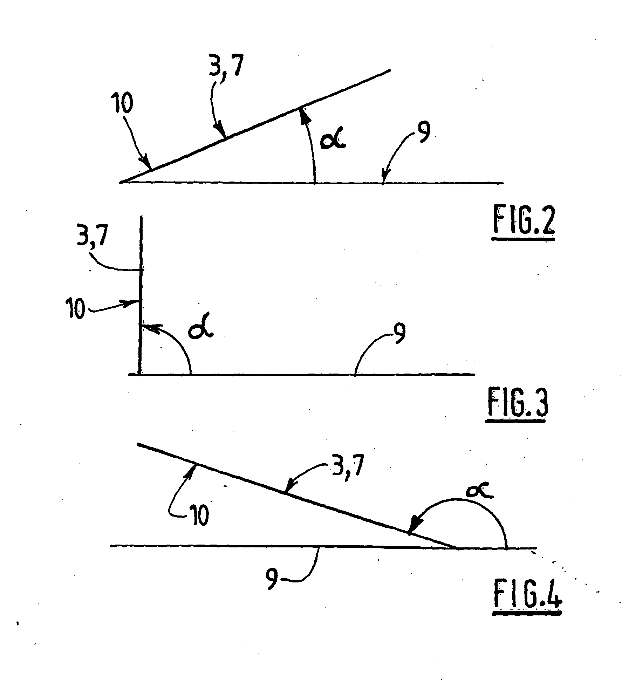

This is illustrated in Figures 2 to 4, wherein :
- Figure 2 shows the welding along a plan of joint 3, 7 forming an angle (α) of about 40° with the horizontal 9, i.e. a flat ground for example. The arrow 10 shows on which side of the piece(s), the flux should be deposited and maintained, and the welding done. In this case, the welding head (not shown) is located above the upper surfaces of the pieces to be welded together.
- Figure 3 shows the welding along a plan of joint 3, 7 forming an angle (α) of about 90° with the horizontal 9. This is what is typically referred as to a so-called vertical welding configuration. The arrow 10 shows on which side of the piece(s), the flux should be deposited and maintained, and the welding should be carried out. In this case, the welding head (not shown) is facing the upper surfaces of the pieces to be welded together, said pieces being vertically positioned with respect to the horizontal ground 9.
- Figure 4 shows the welding along a plan of joint 3, 7 forming an angle (α) of about 150° with the horizontal 9, i.e. a flat ground for example. This is what is typically referred as to a so-called overhead welding configuration. The arrow 10 shows on which side of the piece(s), the flux is deposited and the welding should be carried out. In this case, the welding head (not shown) is located under the upper surface of the pieces to be welded together as the upper surfaces of said pieces are facing the ground 9.

In order to address the problem solved by the present invention, the flux should be deployed in a right way during the SAW operation, i.e. the flux must be kept in constant contact with the plan of joint to be welded in order to avoid any drop off or dripping of the melted metal out of the welding bath, regardless of the angle formed by the plates with the horizontal ground.

Of course, the flux should also have a correct mineral composition to allow a quick solidifying of the crust and a resulting crust strength sufficient to support the welded metal while it solidifies. Such kinds of flux are available on the market, for instance, the flux commercialized by Oerlikon Schweisstechnik under the reference OP 180 S can be used.

However, having a quick solidifying flux is not enough for being able to run a SAW process in angle, vertical and overhead welding.

According to the present invention, the flux is kept in contact with the welding zone, i.e. the plan of joint to be welded, during angle, vertical and overhead welding, by flux maintaining means.

The maintaining means used in the present invention for allowing SAW outside of the horizontal position, comprises flux packing means.

According to the present invention, the flux maintaining means is a packing of loose flux that is applied to the welding area and kept into contact with the welding area.

The packing of the flux and its application to the weld solves the problem of loose flux, without interfering with the flux itself. Nevertheless, and according to the present invention, as the packing is directly in contact with the welding zone, the packing material used for packing the flux has to fulfil two important objectives.

First, the packing material should disappear during welding, be dissolved, melted, burnt... in the welding zone and only in the welding zone, i.e. not outside of this zone, otherwise the flux would be involuntary and prematurely freed, and dripping away would occur.

Second, the residue has to be taken up by the slag crust without being dissolved or incorporated into the molten weld bath as a negative element which deteriorates the mechanical, metallurgical and other properties of the weld thus obtained.

A polyethylene foil is used for packing the flux.

Preferably, the flux is packed in a tube-like packing.

Into the tractor or welding head of a column and boom setup, a spool with a foil stripe of about 3.5 times the desired diameter of the final tube is arranged. The foil running off the spool is conformed, via a forming shoulder, into a U-shape which is open to the top, i.e. it has a gutter shape. The powder flux is then progressively deposited into the U-shape foil instead of being loosely delivered over the weld as in the prior art processes. After its filling with a desired amount of flux, the U-shape foil is formed into a closed cylinder and its longitudinal edges are sealed together, for instance welded together, e.g. by means of a high-frequency welding process or any other suitable process or system that allow a quick welding, bonding or similar of the two edges of foil material containing the flux. The filled tube thus obtained is then transported together with the welding wire to the weld area. This can be done progressively during the welding operation.

After ignition, the arc melts the flux-containing tube and is then submerged by the flux, fusing it and thereby giving the desired slag which forms the crust to support the welding bath obtained by the concomitant fusion of the wire or wires and the base material by the electric arc, the welding wire(s) being fed to the welding area in the usual way.

According to an alternative embodiment, the welding wire can be integrated into the flux-containing tube during the filling operation of the U-shaped foil with flux as explained above. In that case, the welding wire is in the middle of the tube integrated in the flux and the melting of the wire and flux would be done simultaneously as both would be delivered at the same time to the welding area.

Of course, by using a strong foil as the flux-packing, it is possible to realise the flux filling step on site and away from moving parts, the flux-containing tube being afterwards conveyed to the moving parts.

However, the flux-packing can also be in another plant and subsequently delivered to the place where it should be used, for example in flux-packing spools like the welding wires.

Preferably, the flux maintaining means are integrated to the welding head or tractor and/or disposed into the welding joint by a mechanical device.

## Claims

1. A submerged arc welding (SAW) process, comprising :
a) contacting a first edge of a first metal piece (1) with a second edge of said first metal piece (1) or a second edge of a second metal piece (2) so as to form a plan of joint (3,7) to be welded,
b) depositing a flux (4) on said plan of joint (3,7) and progressively delivering at least one welding consumable into the flux,
c) progressively melting the consumable, at least a part of the first and second edges and at least a part of the flux using at least one electric arc thereby progressively forming a welding joint between said first and second edges along said plan of joint, and wherein
- the plan of joint (3,7) to be welded forms an angle (α) of at least 30° with the horizontal,
- and flux maintaining means are used for maintaining the flux in position in the plan of join at least during steps b) and c), **characterized in that** the flux maintaining means comprises a flux-containing packing that contains the welding flux, wherein the flux-containing packing comprises a polyethylene foil and wherein the flux packing is applied to the welding area and kept into contact with said welding area while carrying out the submerged arc welding operation, so that the packing disappears during welding, be dissolved, melted, burnt in the welding zone and only in the welding zone.

2. A process according to claim 1, **characterized in that** the plan of joint (3,7) to be welded forms an angle (α) of at least 50° with the horizontal.

3. A process according to any one of claims 1 or 2, **characterized in that** the plan of joint (3,7) to be welded forms an angle (α) of at least 70° with the horizontal.

4. A process according to claim 1, **characterized in that** the
polymer foil has an elongated tubular shape and contains the welding flux.

5. A process according to claim 1, **characterized in that** the flux-packing is a tube-like packing.

6. A process according to claim 1, **characterized in that** it is carried out during an overhead, vertical or angle welding operation.

7. A process according to claim 1, **characterized in that** the welding consumable is one or several wires.

## Patentansprüche

1. Unterpulver-Lichtbogenschweiß(SAW)-Verfahren, umfassend:
a) In-Kontakt-Bringen eines ersten Randes eines ersten Metallstücks (1) mit einem zweiten Rand des ersten Metallstücks (1) oder einem zweiten Rand eines zweiten Metallstücks (2), so dass eine vorläufige, zu schweißende Naht (3, 7) gebildet wird,
b) Abscheiden eines Flussmittels (4) auf der vorläufigen Naht (3, 7) und fortschreitendes Zuführen mindestens eines Schweißzusatzes in das Flussmittel,
c) fortschreitendes Schmelzen des Zusatzes, wobei mindestens ein Teil des ersten und des zweiten Randes und mindestens ein Teil des Flussmittels mindestens einen elektrischen Lichtbogen verwenden, wodurch entlang der vorläufigen Naht fortschreitend eine Schweißnaht zwischen dem ersten und dem zweiten Rand gebildet wird,
und wobei
- die vorläufige, zu schweißende Naht (3, 7) einen Winkel (α) von mindestens 30° mit der Horizontalen bildet,
- und ein flussmittelhaltendes Mittel verwendet wird, um das Flussmittel mindestens während der Schritte b) und c) an seiner Position in der vorläufigen Naht zu halten, **dadurch gekennzeichnet, dass** das flussmittelhaltende Mittel eine flussmittelhaltige Packung umfasst, die das Schweißflussmittel enthält, wobei die flussmittelhaltige Packung eine Polyethylenfolie umfasst und wobei die Flussmittelpackung auf den Schweißbereich aufgetragen und in Kontakt mit dem Schweißbereich gehalten wird, während der Unterpulver-Lichtbogenschweiß-Vorgang ausgeführt wird, so dass die Packung während des Schweißens verschwindet, in der Schweißzone und nur in der Schweißzone aufgelöst, geschmolzen, verbrannt wird.

2. Verfahren nach Anspruch 1, **dadurch gekennzeichnet, dass** die vorläufige, zu schweißende Naht (3, 7) einen Winkel (α) von mindestens 50° mit der Horizontalen bildet.

3. Verfahren nach einem der Ansprüche 1 oder 2, **dadurch gekennzeichnet, dass** die vorläufige, zu schweißende Naht (3, 7) einen Winkel (α) von mindestens 70° mit der Horizontalen bildet.

4. Verfahren nach Anspruch 1, **dadurch gekennzeichnet, dass** die Polymerfolie eine längliche Röhrenform aufweist und das Schweißflussmittel enthält.

5. Verfahren nach Anspruch 1, **dadurch gekennzeichnet, dass** die Flussmittelpackung eine röhrenförmige Packung ist.

6. Verfahren nach Anspruch 1, **dadurch gekennzeichnet, dass** es während eines überkopf, vertikal oder in einem Winkel ausgeführten Schweißvorgangs ausgeführt wird.

7. Verfahren nach Anspruch 1, **dadurch gekennzeichnet, dass** es sich bei dem Schweißzusatz um einen oder mehrere Drähte handelt.

## Revendications

1. Procédé de soudage à arc submergé (SAW) comprenant les étapes consistant à :
a) mettre en contact un premier bord d'une première pièce métallique (1) et un second bord de ladite première pièce métallique (1) ou un second bord d'une seconde pièce métallique (2) pour former un plan de joint (3, 7) à souder,
b) déposer un flux (4) sur ledit plan de joint (3, 7) et acheminer progressivement au moins un consommable de soudage dans le flux,
c) fondre progressivement le consommable, au moins une partie du premier et du second bord et au moins une partie du flux en utilisant au moins un arc électrique, formant progressivement de la sorte un joint de soudage entre lesdits premier et second bords le long dudit plan de joint,
et dans lequel :
- le plan de joint à souder forme un angle (α) d'au moins 30 ° avec l'horizontale,
- des moyens de maintien du flux sont utilisés pour maintenir le flux en position dans le plan de joint au moins au cours des étapes b) et c), **caractérisé en ce que** les moyens de maintien du flux comprennent un paquet contenant le flux qui contient le flux de soudage, dans lequel le paquet contenant le flux comprend un film de polyéthylène et dans lequel le paquet de flux est appliqué à la zone de soudage et maintenu en contact avec ladite zone de soudage tout en effectuant l'opération de soudage à arc submergé de sorte que le paquet disparaisse au cours du soudage, soit dissous, fondu, brûlé dans la zone de soudage et seulement dans la zone de soudage.

2. Procédé selon la revendication 1, **caractérisé en ce que** le plan de joint (3, 7) à souder forme un angle (α) d'au moins 50 ° avec l'horizontale.

3. Procédé selon l'une quelconque des revendications 1 ou 2, **caractérisé en ce que** le plan de joint (3, 7) à souder forme un angle (α) d'au moins 70 ° avec l'horizontale.

4. Procédé selon la revendication 1, **caractérisé en ce que** le film de polymère a une forme tubulaire allongée et contient le flux de soudage.

5. Procédé selon la revendication 1, **caractérisé en ce que** le paquet de flux est un paquet de type tubulaire.

6. Procédé selon la revendication 1, **caractérisé en ce qu'**il est effectué au cours d'une opération de soudage inversée, verticale ou angulaire.

7. Procédé selon la revendication 1, **caractérisé en ce que** le consommable de soudage est formé d'un ou plusieurs fils métalliques.
